# EUROPEAN PATENT APPLICATION

(11) **EP 0 787 469 A1**
(43) Date of publication of application: **06.08.1997**
(21) Application number: 96101471.9
(22) Date of filing: 02.02.1996
(51) Int. Cl.: A61C 17/16, A46B 15/00

(54) **Electronic tooth device**

(71) Applicant: KABUSHIKI KAISHA SANGI, Tokyo 104 (JP)
(72) Inventor: Yoshida, Hiroshi, Kashiwa-shi, Chiba-ken (JP); Atsumi, Kiminori, Tokyo (JP)
(74) Representative: Marx, Lothar, Dr.

(57) **Abstract**

A toothbrush device which can produce a sound and/or an image during tooth-brushing including a brush portion (13) and a handle portion (12), wherein a battery (16), a transmitter (17), a switch and a receiver (18) are provided inside the handle portion and wherein the receiver has a self program to reproduce a sound or an image upon receiving a signal from the brush portion.

## Description

### BACKGROUND OF THE INVENTION

### Field of the Invention

The present invention relates generally to a toothbrush device and, more particularly, to producing a sound and/or an image during brushing so that the user does not feel that brushing of teeth is a monotonous chore.

Healthy teeth are important for having a good appetite and sleeping comfortably, which are key factors for a joyful life. Therefore, it is a very important role for parents to educate children to form good havits, including spending enough time brushing teeth so as to keep the child's teeth healthy through its life. However, in actual daily life, it is not always easy for parents to pay much attention to the tooth-brushing time of the child and confirm whether the child is spending enough time for adequate brushing. The brushing of teeth is a monotonous action that palls on a child, and the child is apt to terminate brushing his teeth within a very short period of time.

Even adults do not always spend enough time on tooth-brushing because of normal business activities in the morning and the monotonous nature of the activity.

### SUMMARY OF THE INVENTION

It is therefore an object of the present invention to provide a toothbrush device which can remove the monotonous nature of the tooth-brushing action, which is a cause for the short time devoted to brushing and which adds joy to tooth-brushing for children and adults.

The subject invention is for producing a sound or image during tooth-brushing (hereinafter referred to as "brushing") which is effective for resolving the above problems. The device of the present invention can produce a sound and/or an image during brushing by placing a programmed receiver to produce a sound and/or an image by receiving a signal from a transmitter in the toothbrush.

When the toothbrush is grasped and inserted in the mouth, the electric circuit in the toothbrush is closed through a human body and the electronic state of the receiver turns "on", receiving an electronic signal from the transmitter. The electronic state "on" of the receiver rotates a cassette tape or disc therein and produces a sound or an image.

This enables the parents to control the brushing period of the child by the use of a timer to be connected with the electronic circuit and to acknowledge the termination or duration of brushing of the child. Meanwhile, the child can enjoy brushing while hearing a sound or seeing an image.

### BRIEF DESCRIPTION OF THE DRAWINGS

The invention will be further described in conjunction with the accompanying drawings, in which:
Figure 1 is a side view, partially in section, of a first embodiment of a toothbrush device according to the present invention;
Figure 2 is a side view, partially in section, of a second embodiment of a toothbrush according to the present invention;
Figure 3 is a side view, partially in section, of a third embodiment of a toothbrush according to the present invention; and
Figure 4 is a side view, partially in section, of a transmitter set in the toothbrush in accordance with the present invention.

### DETAILED DESCRIPTION OF THE PREFERRED EMBODIMENT

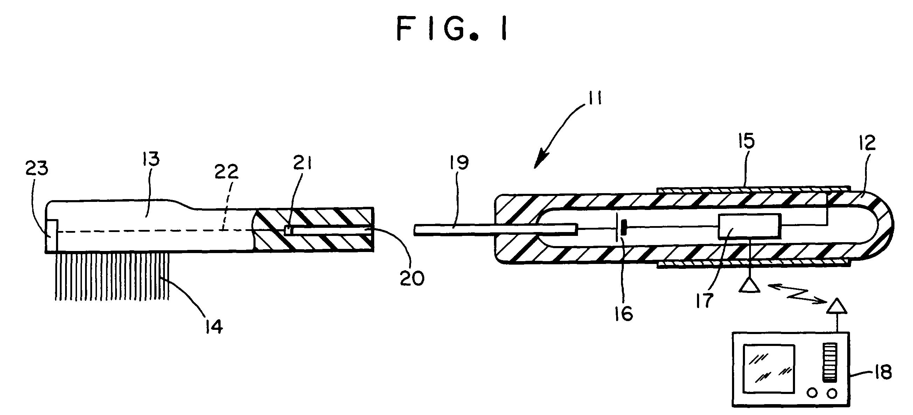

A preferred embodiment of a toothbrush device according to the present invention will now be described in detail with reference to the drawings and, more particularly to Figure 1, wherein a toothbrush 11 includes a handle portion 12, preferably made of plastic and having a brush portion 13 implanted with bristles 14.

An electric conductive metal plate 15 is fixed on the outer surface of a handle portion 12. A battery 16 and a transmitter 17 are located inside the handle portion 12.

A receiver 18 to be activated by receiving an electric wave from the transmitter 17 is placed near to the toothbrush 11. One terminal of battery 16 is connected to the metal plate 15 through the transmitter 17 and the other terminal is connected to an electric conductive metal rod 19.

The metal rod 19 can be freely inserted in a groove 20 of the brush portion 13 and a terminal 21 on a buttom of the groove 20 which is electrically connected to the metal rod 19 is connected to an electrode plate 23 on the outer surface of the brush portion 13.

In operation, the handle portion 12 and brush portion 13 are joined by inserting the metal rod 19 in the groove 20. The metal plate 15 forms a negative electrode and the metal plate 23 forms a positive electrode.

When the bristles 14 are inserted into the mouth and the metal plate 15 is grasped, the metal plate 15 and electrode plate 23 are connected electrically through a human body and a signal with a particular frequency is generated from the transmitter 17. The signal makes the electronic state of the receiver 18 "on " and a selected sound and/or image are reproduced. When the bristles 14 are separated from the mouth after finishing brushing, the electrical connection between the metal plate 15 and the electrode plate 23 is shut down and the electric signal from the transmitter 17 to the receiver 18 is stopped and the state of the receiver 18 becomes "off".

In other words, the receiver 18 reproduces a sound and/or an image during brushing and terminates the reproduction by the finishing of brushing.

The receiver 18 contains exchangeable cassette tapes and/or disks which can reproduce a sound and/or an image. The program could be selected either for the child or adult by exchanging the tape or disk.

It is possible to make the state of the receiver "off" after an ideal duration of brushing by the use of a timer incorporated in the circuit. The program can be selected either from those on the market or selected particularly for brushing one's teeth.

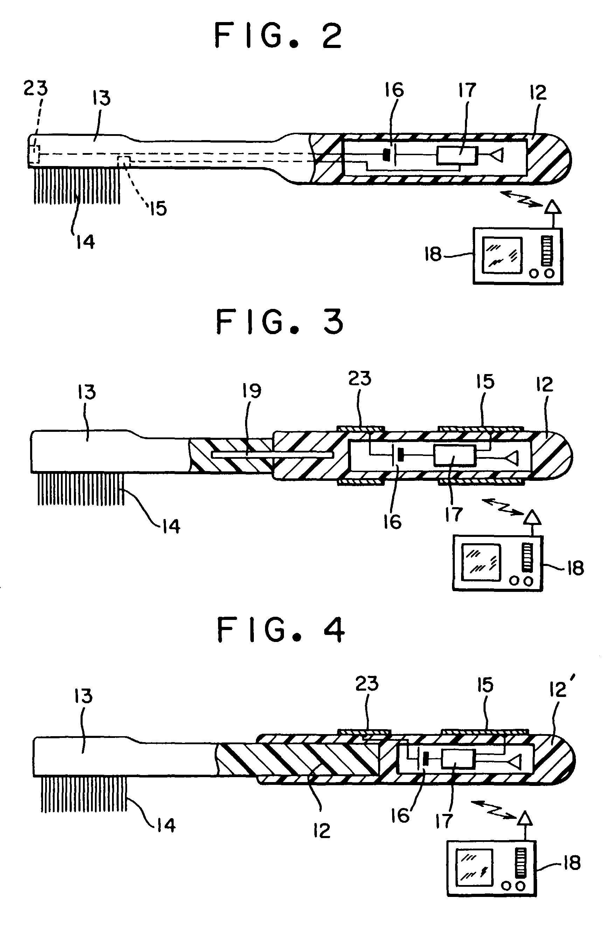

Figure 2 illustrates a toothbrush, wherein the brush portion 13 and the handle portion 12 are molded integrally and the metal plate 15 and the electrode plate 23 are placed ajdacent to the bristles 14.

In this case, when the bristles 14 are inserted in the mouth, the metal plate 15 and the electrode plate 23 are connected electrically by saliva and hyman body and the electric circuit is closed to send a signal from the transmitter 17 to the receiver 18 and a reproduction of a sound and an image becomes available at the receiver 18. A timer can also be incorporated in an electric circuit in this case.

Figure 3 illustrated a case when the handle portion 12 is detachable from the brush portion 13, and the metal plate 15 and the electrode plate 23 are fixed separated on the outer surface of the handle portion 12. In this embodiment, when the user holds the hand portion 12, the metal plate 15 and the electrode plate 23 are electrically connected through the hand, closing the electric circuit and the receiver 18 produces a sound and an image by a signal from the transmitter 17.

One can use a timer, if he wishes, to determine the time for the reproduction in advance.

In the examples illustrated by Figures 1 through 3, the electric circuit in the toothbrush 11 is opened when the bristles 14 are taken out from the mouth or the hand is detached from the handle portion 12 upon finishing a brushing action, the signal transmission from the transmitter 17 to the receiver 18 is stopped and the electronic state of receiver 18 becomes "off".

The transmitter 17 and the battery 16 are incorporated in the handle portion 12 in the examples illustrated by Figures 1 through 3; however, it is also possible to mount a cassette 12' equipped with the transmitter 17 and the battery 16 on the handle portion 12 (Figure 4).

The receiver 18 can serve as a brush holder and, in this case, the electronic state of the receiver 18 may become "on" (a state available for receiving the transmission signal) by the displacement of the brush from the brush holder.

The use of the toothbrush apparatus according to the present invention enables the child and/or adult to enjoy brushing while hearing or seeing a favorable sound or image. This is a very effective way to form good habits for brushing one's teeth, especially for children.

The present invention is not limited to the foregoing embodiments but can be modified in various ways based on the gist thereof without departing from the scope of the claims.

## Claims

1. An electronic toothbrush device comprising:
a brush portion, a handle portion and a receiver, wherein a battery, and a transmitter, are provided inside said handle portion, and said receiver having a self program to reproduce a sound and/or an image upon receiving a signal from said tansmitter and placed near the toothbrush device.

2. An electronic toothbrush device according to claim 1, wherein said receiver comprises a detachable cassette tape or disc.

3. An electronic toothbrush device according to claim 1, wherein said handle portion is detachable from said brush portion.

4. An electronic toothbrush device according to claim 1, wherein said brush portion and said handle portion are equipped with electrode plates.

5. An electronic toothbrush device according to claim 4, wherein said plates are placed separate from each other in said brush portion or said handle portion.

6. An electronic toothbrush device according to claim 1, wherein a timer is connected within an electronic circuit either in said handle portion or said receiver.
